# EUROPÄISCHE PATENTSCHRIFT

(11) **EP 2 273 205 B1**
(45) Veröffentlichungstag und Bekanntmachung des Hinweises auf die Patenterteilung: **04.01.2012**
(21) Anmeldenummer: 10163724.7
(22) Anmeldetag: 25.05.2010
(51) Int. Cl.: F24D 3/14

(54) **Befestigungssystem für Rohrhalter für Installationsrohre, insbesondere Fußbodenheizungsrohre**
Fastening system for pipe bracket for installation pipe, in particular underfloor heating pipe
Système de fixation pour supports de tuyaux destiné à des tuyaux d'installation, notamment des tuyaux de chauffage au sol

(30) Priorität: 13.06.2009 DE 102009024836
(43) Veröffentlichungstag der Anmeldung: 12.01.2011
(73) Patentinhaber: Schütz GmbH & Co. KGaA, 56242 Selters (DE)
(72) Erfinder:
(74) Vertreter: advotec.

(56) Entgegenhaltungen:
- EP-B1- 0 635 684
- DE-A1- 3 014 789
- DE-U1-202006 019 963

## Beschreibung

Die Erfindung betrifft ein Befestigungssystem für Rohrhalter für Installationsrohre, insbesondere Fußbodenheizungsrohre, auf Drähten von Bewehrungsgittern, Trägermatten und dergleichen Bauelementen, mit Rohrhaltern aus Kunststoff, die einen Fuß aufweisen mit zwei bogenförmigen, nach oben gerichteten Klemmschenkeln zur Bildung einer Aufnahmeöffnung für ein Fußbodenheizungsrohr sowie einer nach unten offenen Klemmöffnung in der Unterseite des Fußes zur Befestigung des Rohrhalters an einem Draht, wobei zwischen der Klemmöffnung in der Unterseite des Fußes und den Klemmschenkeln des Fußes ein federnd ausgebildeter Steg angeordnet ist, mit einem Setzgerät mit einem Gehäuse, einem in diesem geführten, manuell oder motorisch betätigten Schieber mit einem Aufdrückende, das eine Aufnahmeöffnung für die anzubringenden Rohrhalter aufweist und in einem Ausstoßkanal mit einer Ausstoßöffnung im Gehäuse des Setzgerätes verschiebbar ist, sowie einem an dem Gehäuse des Setzgerätes angebrachten Magazin mit einer Haltestange für die Rohrhalter, wobei das untere Abgabeende der stehend angeordneten Haltestange in eine seitliche Öffnung des Ausstoßkanals mündet.

Zum Befestigen eines Rohrhalters auf einem Draht wird der Stempel des Setzgerätes eines in der EP 0 635 684 B1 beschriebenen Befestigungssystems manuell nach unten gedrückt. Dabei gleiten an den Klemmschenkeln des Rohrhalters angeordnete, nach oben gerichtete Schrägflächen auf entsprechenden Schrägflächen des Ausstoßkanals des Gehäuses des Setzgerätes, und die Klemmöffnung in der Unterseite des Fußes wird, bedingt durch den federnd ausgebildeten Steg zwischen den Klemmschenkeln und der Klemmöffnung des Fußes, aufgeweitet, so dass ein leichtes Aufsetzen des Rohrhalters auf den Draht möglich ist. Sobald die Klemmschenkel des Rohrhalters für ein Fußbodenheizungsrohr am weitesten zusammengedrückt sind, kommen die Schrägflächen der Klemmschenkel des Rohrhalters von den Schrägflächen frei, so dass die Klemmöffnung an der Unterseite des Rohrhalters auf den Draht aufschnappt. Der Stempel wird durch eine Rückstellfeder in seine Ausgangsstellung zurückbewegt, und das Setzgerät ist für den nächsten Befestigungsvorgang betriebsbereit.

Der Rohrhalteclip eines weiteren in der DE 20 2006 019 963 U1 beschriebenen Befestigungssystems für Fußbodenheizungsrohre auf einer Gittermatte weist ein Haltemaul zur Aufnahme eines Fußbodenheizungsrohres auf, das in einen Fuß übergeht, dessen Enden das Haltemaul beidseitig überragen, wobei in dem Fuß unter Belassung eines federnden Materialstegs zum Haltemaul eine nach unten offenen Klemmöffnung vorgesehen ist. Das Setzgerät des Befestigungssystems besitzt eine stielartige Setzstange und einen Aufsetzfuß. Die Setzstange steht an ihrem oberen Ende mit einem Handgriff in Wirkverbindung und weist an ihrem unteren Ende einen Stempel auf. In dem Aufsetzfuß ist ein Ausstoßschacht angeordnet, in den der Stempel hineinragt und der einen Rohrhalteclip aufnimmt. Bei Betätigung der Setzstange mit dem Handgriff trifft der Stempel auf den Materialsteg des Rohrhalteclips auf und drückt diesen gegen einen Draht. Dabei laufen die Enden des Fußes des Rohrhalteclips unter dem Druck des Stempels auf eine am Ausgang des Ausstoßschachtes des Aufsetzfußes des Setzgerätes vorgesehene Verengung auf und werden dabei nach innen gedrückt, derart, dass die Klemmöffnung im Fuß des Rohrhalteclips aufgespreizt und der Rohrhalteclip unter dem Stempeldruck mit der aufgeweiteten Klemmöffnung auf einen Draht aufgedrückt wird. Das Dokument DE 20 2006 019 963 U1 offenbart den ersten Teil des Anspruchs 1.

Der Erfindung liegt die Aufgabe zugrunde, ein weiteres Befestigungssystem für Fußbodenheizungsrohre auf einer Gittermatte zu entwickeln.

Diese Aufgabe wird erfindungsgemäß gelöst durch ein Befestigungssystem mit den Merkmalen des Patentanspruchs 1.

Patentanspruch 2 beinhaltet eine vorteilhafte und zweckmäßige Weiterbildung der Erfindung.

Die Erfindung ist nachstehend anhand von Zeichnungsfiguren erläutert, die folgendes darstellen:
- Fig. 1: eine perspektivische Ansicht des Setzgerätes des Befestigungssystems für Rohrhalter,
- Fig. 2: eine Innenansicht des Gehäuses des Schiebers des Setzgerätes in vergrößerter Darstellung,
- die Fign. 3a - 3d: vier Betriebspositionen des Schiebers des Setzgerätes beim Befestigen eines Rohrhalters auf einem Draht und
- Fig. 4: die Vorderansicht eines bei dem Befestigungssystem verwendeten Rohrhalters in vergrößerter Darstellung.

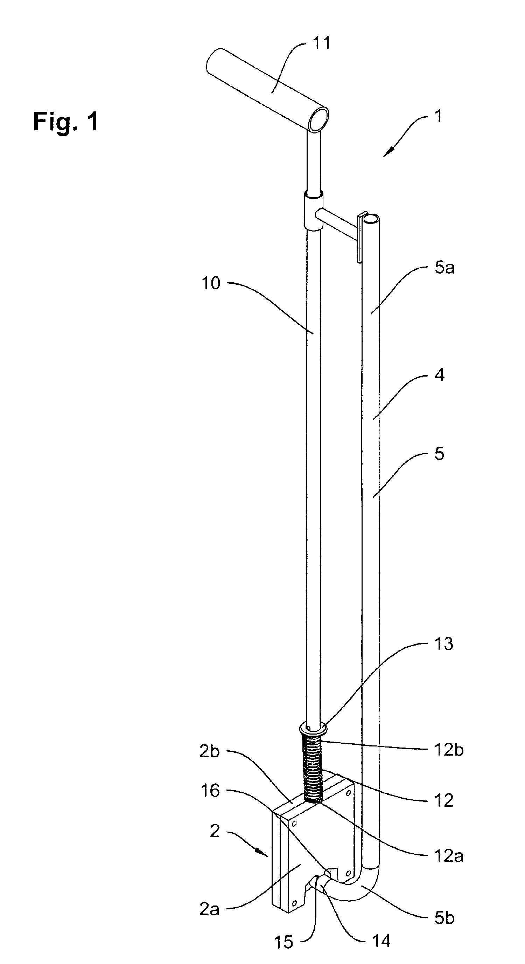

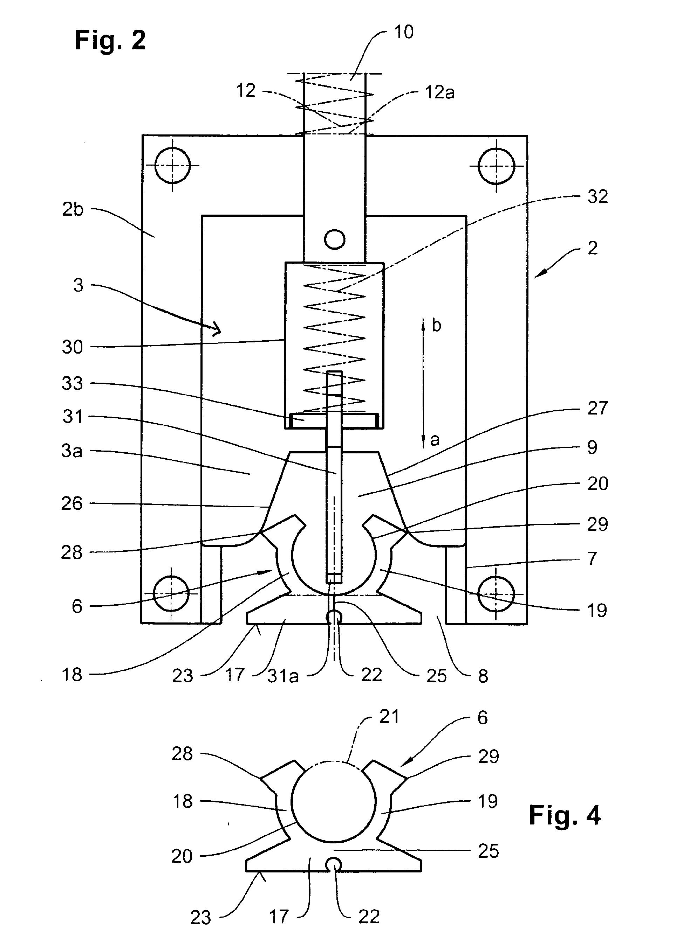

Hauptbauteile des Setzgerätes 1 des Befestigungssystems nach den Fign. 1 und 2 sind ein flaches Gehäuse 2, ein in diesem geführter, manuell betätigter Schieber 3 sowie ein an dem Gehäuse 2 angebrachtes Magazin 4 mit einer Haltestange 5 zum Aufstecken von Rohrhaltern 6.

Das Gehäuse 2, das aus zwei miteinander verschraubten Gehäuseteilen 2a, 2b besteht, bildet einen rechteckigen Ausstoßkanal 7 mit einer Ausstoßöffnung 8, in dem der Schieber 3, der an seinem Aufdrückende 3a eine Aufnahmeöffnung 9 für einen Rohrhalter 6 aufweist, verschiebbar ist.

Die Haltestange 5 des Rohrhaltermagazins 4 ist parallel zu einer an dem Schieber 3 befestigten Betätigungsstange 10 ausgerichtet, an deren oberen Ende ein zylindrischer Handgriff 11 angebracht ist, der zur Betätigungsstange 10 unsymmetrisch ausgebildet und quer zur Bewegungsrichtung a, b des Schiebers gerichtet ist. Der längere Teil des Handgriffs 11 ist entgegen dem Magazin 4 gerichtet, dessen Höhe so bemessen ist, dass zwischen Handgriff 11 und oberem Ende des Magazins 4 ein genügend großer Freiraum verbleibt, um den Handgriff bequem fassen zu können.

Die Betätigungsstange 10 des Schiebers 3 stützt sich über eine als Druckfeder ausgebildete, auf die Betätigungsstange aufgeschobene Rückstellfeder 12 an dem Gehäuse 2 des Setzgerätes 1 ab, wobei das untere Ende 12a der Rückstellfeder 12 am Gehäuse 2 und das obere Ende 12b der Feder an einem auf der Betätigungsstange 10 befestigten Anschlag 13 anliegt.

Die Haltestange 5 des Magazins 4 weist einen oberen geraden Stangenabschnitt 5a und einen unteren kreisbogenförmigen Abschnitt 5b mit einem Abgabeende 14 auf. Die Haltestange 5 des Magazins 4 ist mit einer am Abgabeende 14 angebrachten Halteplatte 15 am Gehäuse 2 des Setzgerätes 1 befestigt. Das untere Abgabeende 14 der Haltestange 5 des Magazins 4 mündet in eine seitliche Öffnung 16 des Ausstoßkanals 7 des Gehäuses 2 des Setzgerätes 1.

Der in Fig. 4 dargestellte Rohrhalter 6, der als ein Spritzgussteil aus Kunststoff gefertigt ist, weist einen Fuß 17 mit zwei bogenförmigen, nach oben gerichteten Klemmschenkeln 18, 19 zur Bildung einer Aufnahmeöffnung 20 für ein Fußbodenheizungsrohr 21 sowie eine nach unten offenen Klemmöffnung 22 in der Unterseite 23 des Fußes 17 zur Befestigung des Rohrhalters 6 an einem Draht 24 auf, wobei zwischen der Klemmöffnung 22 in der Unterseite 23 des Fußes 17 und den Klemmschenkeln 18, 19 des Fußes ein federnd ausgebildeter Steg 25 angeordnet ist.

Die trapezförmig ausgebildete Aufnahmeöffnung 9 im Aufdrückende 3a des Schiebers 3 für die Rohrhalter 6 weist zwei entgegen der Aufdrückrichtung a des Schiebers konvergierende Klemmschenkel 26, 27 auf, die beim Aufdrücken des Schiebers 3 zur Befestigung der auf einen Draht 24 aufgesetzten Rohrhalter 6 mit entsprechenden Klemmkanten 28, 29 an den Klemmschenkeln 18, 19 der Rohrhalter 6 derart zusammenwirken, dass beim Aufdrücken des Schiebers 3 auf die Rohrhalter 6 die Klemmschenkel 18, 19 derselben zusammengedrückt werden und dadurch die Klemmöffnung 22 in der Unterseite 23 des Fußes 17 der Rohrhalter 6 zum Aufrasten derselben auf den Draht 24 aufgeweitet wird und beim Abheben des Schiebers in Pfeilrichtung b von den Rohrhaltern 6 die Klemmschenkel 18, 19 für das Fußbodenheizungsrohr 21 in der sich entgegen der Abheberichtung b des Schiebers 3 aufweitenden Aufnahmeöffnung 9 auffedern und dadurch der Draht 24 von der sich schließenden Klemmöffnung 22 in der Unterseite 23 des Fußes 17 der Rohrhalter 6 fest umschlossen wird.

Der Schieber 3 des Setzgerätes 1 weist ein Fenster 30 auf, in dem ein zentrischer Stift 31 verschiebbar geführt ist, der in die Aufnahmeöffnung 9 des Schiebers 3 für die Rohrhalter 6 hineinragt, durch eine Druckfeder 32 in Aufdrückrichtung a des Schiebers 3 beaufschlagt ist und beim Aufdrücken des Schiebers 3 auf die Rohrhalter 6 beim Befestigungsvorgang zum Zentrieren der Rohrhalter und beim Abheben des Schiebers 3 von den auf einen Draht 24 aufgerasteten Rohrhaltern 6 zum Niederhalten der Rohrhalter bis zum vollständigen Umschließen des Drahtes 24 durch die Klemmöffnung 22 in der Unterseite 23 der Rohrhalterfüße 17 an dem federnd ausgebildeten Steg 25 der Füße 17 der Rohrhalter 6 anliegt.

Auf dem in das Fenster 30 des Schiebers 3 des Setzgerätes 1 hineinragenden Ende des Zentrier- und Niederhalterstiftes 31 ist eine Führungs- und Druckscheibe 33 befestigt, die in dem Fenster 30 des Schiebers geführt und von der Druckfeder 32 in Aufdrückrichtung a des Schiebers 3 beaufschlagt ist.

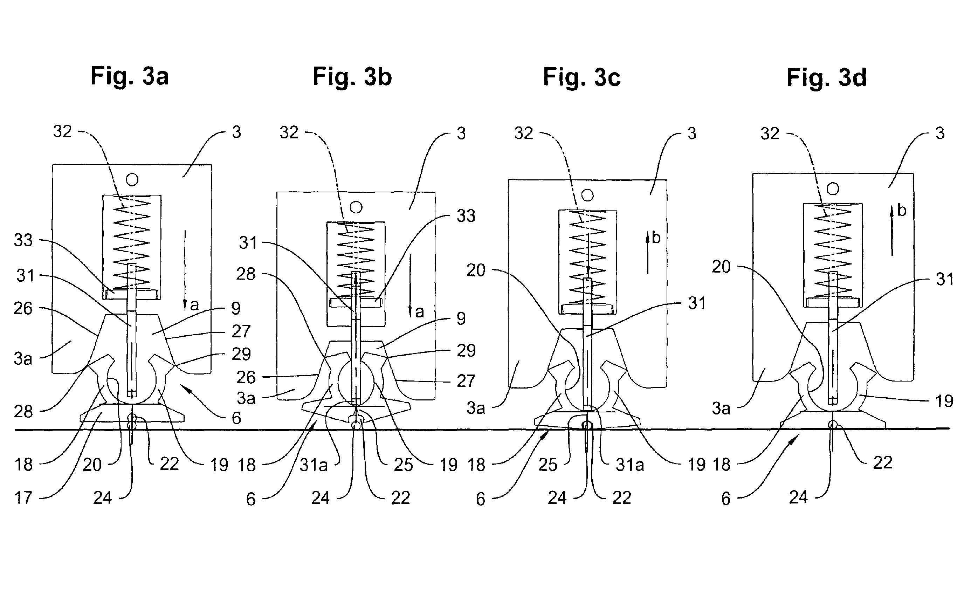

Fig. 3a zeigt eine schematische Darstellung des Schiebers 3 des Setzgerätes 1 mit einem von diesem gehaltenen, auf einen Draht 24 aufgesetzten Rohrhalter 6 zu Beginn des Befestigungsvorgangs.

Fig. 3b verdeutlicht die Positionen von Schieber 3 und Rohrhalter 6 nach dem Aufdrücken des Schiebers auf den Rohrhalter mit der aufgeweiteten Klemmöffnung 22 zur Befestigung des Rohrhalters 6 auf dem Draht 24, wobei der Rohrhalter 6 von dem Zentrier- und Rückhaltestift 31 des Schiebers 3 zentriert wird.

Fig. 3c veranschaulicht eine von dem Rohrhalter 6 abgehobene Zwischenposition des Schiebers 3, in der die zurückgefederte Klemmöffnung 22 des Rohrhalters 6 den Draht 24 lose umschließt, wobei der Rohrhalter 6 durch den Rückhaltestift 31 des Schiebers 3 zurückgehalten wird.

Aus Fig. 3d geht eine von dem Rohrhalter 6 noch weiter abgehobene Zwischenposition des Schiebers 3 hervor, in der die Klemmöffnung 22 des Rohrhalters 6 den Draht 24 fest umschließt, so dass das Setzgerät 1 von dem Draht 24 abgehoben werden kann.

Mit dem vorbeschriebenen Befestigungssystem ist es möglich, Rohrhalter schnell und einfach mit geringem Arbeitsaufwand in aufrechter Haltung an ausgewählten Stellen auf Drähten von Trägermatten oder dergleichen zu befestigen.

## Patentansprüche

1. Befestigungssystem für Rohrhalter (6) für Installationsrohre, insbesondere Fußbodenheizungsrohre (21), auf Drähten (24) von Bewehrungsgittern, Trägermatten und dergleichen Bauelementen, mit Rohrhaltern (6) aus Kunststoff, die einen Fuß (17) aufweisen mit zwei bogenförmigen, nach oben gerichteten Klemmschenkeln (18, 19) zur Bildung einer Aufnahmeöffnung (20) für ein Fußbodenheizungsrohr (21) sowie einer nach unten offenen Klemmöffnung (22) in der Unterseite (23) des Fußes (17) zur Befestigung des Rohrhalters (6) an einem Draht (24), wobei zwischen der Klemmöffnung (22) in der Unterseite (23) des Fußes (17) und den Klemmschenkeln (18, 19) des Fußes (17) ein federnd ausgebildeter Steg (25) angeordnet ist, mit einem Setzgerät (1) mit einem Gehäuse (2), einem in diesem geführten, manuell oder motorisch betätigten Schieber (3) mit einem Aufdrückende (3a), das in einem Ausstoßkanal (7) mit einer Ausstoßöffnung (8) im Gehäuse (2) des Setzgerätes (1) verschiebbar ist, sowie einem an dem Gehäuse (2) des Setzgerätes (1) angebrachten Magazin (4) mit einer Haltestange (5) für die Rohrhalter (6), wobei das untere Abgabeende (14) der stehend angeordneten Haltestange (5) in eine seitliche Öffnung (16) des Ausstoßkanals ( 7) mündet,
**dadurch gekennzeichnet, dass** das Aufdrückende des Schiebers eine Aufnahmeöffnung (9) für die anzubringenden Rohrhalter (6) aufweist, und
dass die trapezförmige Aufnahmeöffnung (9) für die Rohrhalter (6) im Aufdrückende (3a) des Schiebers (3) zwei entgegen der Aufdrückrichtung (a) des Schiebers (3) konvergierende Klemmschenkel (26, 27) aufweist, die beim Aufdrücken des Schiebers (3) zur Befestigung der auf einen Draht (24) aufgesetzten Rohrhalter (6) mit entsprechenden Klemmkanten (28, 29) oder Klemmflächen an den Klemmschenkeln (18, 19) der Rohrhalter (6) derart zusammenwirken, dass beim Aufdrücken des Schiebers (3) auf die Rohrhalter (6) die Klemmschenkel (18, 19) derselben zusammengedrückt werden und **dadurch** die Klemmöffnung (22) in der Unterseite (23) des Fußes (17) der Rohrhalter (6) zum Aufrasten derselben auf den Draht (24) aufgeweitet wird und beim Abheben des Schiebers (3) von den Rohrhaltern (6) die Klemmschenkel (18, 19) für das Fußbodenheizungsrohr (21) in der sich entgegen der Abheberichtung (b) des Schiebers (3) aufweitenden Aufnahmeöffnung (9) auffedern und **dadurch** der Draht (24) von der sich schließenden Klemmöffnung (22) in der Unterseite (23) des Fußes (17) der Rohrhalter (6) fest umschlossen wird, und dass der Schieber (3) des Setzgerätes (1) ein Fenster (30) aufweist, in dem ein zentrischer Stift (31) verschiebbar geführt ist, der in die Aufnahmeöffnung (9) des Schiebers (3) für die Rohrhalter (6) hineinragt, durch eine Druckfeder (32) in Aufdrückrichtung (a) des Schiebers (3) beaufschlagt ist und beim Aufdrücken des Schiebers (3) auf die Rohrhalter (6) beim Befestigungsvorgang zum Zentrieren der Rohrhalter (6) und beim Abheben des Schiebers (3) von den auf einen Draht (24) aufgerasteten Rohrhaltern (6) zum Niederhalten der Rohrhalter (6) bis zum vollständigen Umschließen des Drahtes (24) durch die Klemmöffnung (22) in der Unterseite (23) der Rohrhalterfüße (17) an dem federnd ausgebildeten Steg (25) des Fußes (17) der Rohrhalter (6) anliegt.

2. Befestigungssystem nach Anspruch 1, **gekennzeichnet durch** eine Führungs- und Druckscheibe (33), die auf dem in das Fenster (30) des Schiebers (3) des Setzgerätes (1) hineinragenden Ende des Zentrier- und Niederhalterstiftes (31) befestigt, in dem Fenster (30) des Schiebers (3) geführt und von der Druckfeder (32) in Aufdrückrichtung (a) des Schiebers (3) beaufschlagt ist.

## Claims

1. A fastening system for pipe holders (6) for installation pipes, in particular underfloor heating pipes (21), on wires (24) of reinforcement meshes, pipe mats or similar structural elements, with pipe holders (6) made of plastic which have a foot (17) with two arch-shaped upwardly directed clamping shanks (18, 19) for forming an installation opening (20) for an underfloor heating pipe (21) and a clamping opening (22) open toward the bottom in the lower side (23) of the foot (17) for fastening the pipe holder (6) to a wire (24), wherein between the clamping opening (22) in the lower side (23) of the foot (17) and the clamping shanks (18, 19) of the foot (17), a resiliently formed web (25) is arranged, with a setting tool (1) having a housing (2) and a manually actuated or motor-driven slide (3) which is guided in said housing and has a press-open end (3a) that is displaceable within an ejecting channel (7) having an ejecting opening (8) in the housing (2) of the setting tool (1), and a magazine (4) having a holding bar (5) for the pipe holders (6) which magazine is attached to the housing (2) of the setting tool (1), wherein the lower discharge end (14) of the vertically arranged holding bar (5) opens out in a lateral opening (16) of the ejecting channel (7),
**characterized in that** the press-open end of the slide has a receiving opening (9) for the pipe holders (6) to be attached, and that in the press-open end (3a) of the slide (3), the trapezoidal receiving opening (9) for the pipe holders (6) in the push-open end (3a) of the slide (3) has two clamping shanks (26, 27) which converge against the press-open direction (a) of the slide (3) and which, when pressing on the slide (3) for fastening the pipe holders (6) placed onto a wire (24), interact with corresponding clamping edges (28, 29) or clamping faces on the clamping shanks (18, 19) of the pipe holders (6) in such a manner that when pressing the slide (3) onto the pipe holders (6), the clamping shanks (18, 19) of the same are pressed together and thereby, the clamping opening (22) in the lower side (23) of the foot (17) of the pipe holders (6) is widened for snapping said opening onto the wire (24) and, when lifting the slide (3) from the tube holders (6), the clamping shanks (18, 19) for the underfloor heating pipe (21) in the receptacle opening (9) which widens against the lifting direction (b) of the slide (3) spring back and thereby, the wire (24) is firmly enclosed by the closing clamping opening (22) in the lower side (23) of the foot (17) of the pipe holders (6), and that the slide (3) of the setting tool (1) has a window (30) in which a central pin (31) is displaceably guided which pin protrudes into the receiving opening (9) of the slide (3) for the pipe holders (6) and is pressurized in the press-open direction (a) of the slide (3) by a compression spring (32) and which, when pressing the slide (3) onto the pipe holders (6) during the fastening process, for centering the pipe holders (6), and when lifting the slide (3) from the pipe holders (6) snapped onto the wire (24), for holding down the pipe holders (6), abuts against the resiliently formed web (25) of the foot (17) of the pipe holders (6) until the wire (24) is completely enclosed by the clamping opening (22) in the lower side (23) of the pipe holder feet (17).

2. The fastening system according to claim 1, **characterized by** a guide and pressure disk (33) which is fastened to the end of the centering and hold-down pin (31) which protrudes into the window (30) of the slide (3) of the setting tool (1), is guided in the window (30) of the slide (3) and is pressurized in the press-open direction (a) of the slide (3) by the compression spring (32).

## Revendications

1. Système de fixation pour supports de tuyau (6) pour des tuyaux d'installation, en particulier des tuyaux de chauffage par le plancher (21), sur des fils (24) de grilles d'armature, de tapis supports et d'éléments de construction similaires, avec des supports de tuyau (6) en plastique, qui présentent un pied (17) avec deux branches de serrage (18, 19) en forme d'arc, dirigées vers le haut, pour former une ouverture d' installation (20) pour un tuyau de chauffage par le plancher (21) et une ouverture de serrage (22) ouverte vers le bas dans le côté inférieur (23) du pied (17) pour la fixation du support de tuyau (6) sur un fil (24), une entretoise (25) conçue avec ressort étant disposée entre l'ouverture de serrage (22) dans le côté inférieur (23) du pied (17) et les branches de serrage (18, 19) du pied (17), avec un appareil de positionnement (1) avec un boîtier (2), un coulisseau (3) guidé dans ce boîtier, actionné manuellement ou par moteur, avec une extrémité d'engagement par pression (3a), qui peut coulisser dans un canal d'éjection (7) avec une ouverture d'éjection (8) dans le boîtier (2) de l'appareil de positionnement (1), et un magasin (4) placé sur le boîtier (2) de l'appareil de positionnement (1) avec une barre de retenue (5) pour les supports de tuyau (6), l'extrémité de distribution (14) inférieure de la barre de retenue (5) disposée fixement débouchant dans une ouverture (16) latérale du canal d'éjection (7),
**caractérisé en ce que** l'extrémité d'engagement par pression du coulisseau présente une ouverture de logement (9) pour les supports de tuyau (6) à appliquer, **en ce que** l'ouverture de logement (9) de forme trapézoïdale pour les supports de tuyau (6) présente dans l'extrémité d'engagement par pression
(3a) du coulisseau (3) deux branches de serrage (26, 27) convergeant dans le sens opposé au sens d'engagement par pression (a) du coulisseau (3), lesquelles branches coopèrent lors de l'engagement par pression du coulisseau (3) pour la fixation des supports de tuyau (6) posés sur un fil (24) avec des arêtes de serrage (28, 29) ou des surfaces de serrage correspondantes sur les branches de serrage (18, 19) des supports de tuyau (6), de telle sorte que, lors de l'engagement par pression du coulisseau (3) sur les supports de tuyau (6), les branches de serrage (18, 19) des supports de tuyau sont comprimées et qu'ainsi l'ouverture de serrage (22) est élargie dans le côté inférieur (23) du pied (17) des supports de tuyau (6) pour l'encliquetage de ceux-ci sur le fil (24) et, lors du soulèvement du coulisseau (3) des supports de tuyau (6), les branches de serrage (18, 19) pour le tuyau de chauffage par le plancher (21) se détendent dans l'ouverture de logement (9) s'élargissant dans le sens contraire au sens de soulèvement (b) du coulisseau (3) et ainsi le fil (24) est entouré fixement par l'ouverture de serrage (22) qui se ferme dans le côté inférieur (23) du pied (17) des supports de tuyau (6), et **en ce que** le coulisseau (3) de l'appareil de positionnement (1) présente une fenêtre (30), dans laquelle une broche (31) centrée est guidée de façon coulissante, laquelle dépasse à l'intérieur de l'ouverture de logement (9) du coulisseau (3) pour les supports de tuyau (6), est sollicitée par un ressort de pression (32) dans le sens d'engagement par pression (a) du coulisseau (3) et, lors de l'engagement par pression du coulisseau (3) sur les supports de tuyau (6) lors de l'opération de fixation pour le centrage des supports de tuyau (6) et lors du soulèvement du coulisseau (3) des supports de tuyau (6) encliquetés sur un fil (24), s'applique sur l'entretoise (25), conçue de façon élastique, du pied (17) des supports de tuyau (6) pour le maintien des supports de tuyau (6) jusqu'à l'enfermement complet du fil (24) par l'ouverture de serrage (22) dans le côté inférieur (23) des pieds de support de tuyau (17).

2. Système de fixation selon la revendication 1, **caractérisé par** un disque de guidage et de pression (33), qui est fixé sur l'extrémité, dépassant dans la fenêtre (30) du coulisseau (3) de l'appareil de positionnement (1), de la broche de centrage et de retenue (31), est guidé dans la fenêtre (30) du coulisseau (3) et est sollicité par le ressort de pression (32) dans le sens d'engagement par pression (a) du coulisseau (3).
